Europäisches Patentamt

European Patent Office

Office européen des brevets

(11) Veröffentlichungsnummer: **0 308 761 B1**

# EUROPÄISCHE PATENTSCHRIFT

(12)

(45) Veröffentlichungstag der Patentschrift: **11.03.92**

(21) Anmeldenummer: **88114890.2**

(22) Anmeldetag: **12.09.88**

(51) Int. Cl.⁵: **H01M  8/02**, C25B 9/04

(54) **Bauteil für den Stromanschluss einer Batterie aus elektrochemischen Zellen.**

(30) Priorität: **24.09.87 DE 3732235**

(43) Veröffentlichungstag der Anmeldung:
**29.03.89 Patentblatt  89/13**

(45) Bekanntmachung des Hinweises auf die
Patenterteilung:
**11.03.92 Patentblatt  92/11**

(84) Benannte Vertragsstaaten:
**BE DE FR GB IT NL**

(56) Entgegenhaltungen:
**FR-A- 1 433 469**
**FR-A- 2 224 206**
**FR-A- 2 396 425**

(73) Patentinhaber: **SIEMENS AKTIENGESELL-
SCHAFT
Wittelsbacherplatz 2
W-8000 München 2(DE)**

(72) Erfinder: **Strasser, Karl, Dipl.-Ing.
Leipziger Strasse 79
W-8520 Erlangen(DE)**

**Beschreibung**

Die Erfindung betrifft ein Bauteil für den Stromanschluß einer Batterie aus elektrochemischen Zellen, insbesondere Brennstoffelementen, mit Druckkissen in Form von jeweils zwei Kontaktbleche aufweisenden metallischen Kontaktkörpern.

Eine Batterie der genannten Art mit Druckkissen in Form von metallischen Kontaktkörpern ist aus der DE-PS 27 29 640 bekannt. Die Kontaktkörper dienen dabei einerseits zur Stromabnahme, andererseits weisen sie einen Hohlraum auf, dem ein unter Druck stehendes Medium zuführbar ist, so daß auf das Katalysatormaterial der benachbarten Zellen ein gleichmäßiger Anpreßdruck ausgeübt wird.

Die elektrochemischen Zellen einer derartigen Batterie sind in bipolarer Weise aufeinandergestapelt, wobei sich am Stapelende jeweils eine Druckplatte befindet. Zwischen den Druckplatten und dem Druckkissen der nächstliegenden Zelle befindet sich jeweils eine Metallplatte, welche eine nach außen überstehende Lasche aufweist, d.h. eine sogenannte Polplatte. Diese Polplatten dienen zur Stromabnahme bzw. zum Stromanschluß.

Der elektrische Kontakt zwischen den Polplatten und den Druckkissen wird in der Weise hergestellt, daß der Hohlraum der Druckkissen, beispielsweise mittels eines Gases, mit einem Preßdruck beaufschlagt wird. Der elektrische Kontakt kommt aber nur dann zustande, wenn der Zellstapel, d.h. die Batterie, bei Atmosphärendruck betrieben wird oder bei einem Umgebungsdruck, der (deutlich) niedriger ist als der Preßdruck im Inneren der Druckkissen. Liegt der Umgebungsdruck dagegen über dem Preßdruck bzw. steigt er über den Preßdruck an, so wird der Stromfluß entweder unterbrochen oder das Druckkissen wird partiell - wegen undefinierter Kontaktflächen - thermisch überlastet. Dadurch wird aber die Funktionssicherheit der Batterie bzw. von Batterienmoduln gefährdet.

Es wurde bereits versucht, das vorstehend genannte Problem in der Weise zu lösen, daß die Polplatten in eine Kunststoffplatte eingeklebt wurden. Dann besteht nämlich - nach der Montage des Zellstapels - keine Verbindung mehr zwischen dem Raum zwischen Polplatte und Druckkissen und der umgebenden Atmosphäre, und zwar aufgrund der Abdichtung der in die Kunststoffplatte eingeklebten Polplatte an den Elastomerrahmen.

Eine derartige Lösung hat aber folgende Nachteile:

- Das Einkleben der Polplatten in Kunststoffplatten ist wegen der unterschiedlichen Wärmeausdehnungskoeffizienten der Materialien und der geometrischen Abmessungen problematisch. Mechanische Spannungen durch das Klebeverfahren selbst und durch thermische Beanspruchungen im Betrieb erzeugen Risse und damit Leckagen von der Umgebung zum Kontaktierungsraum, wodurch die Funktion der Batterie bzw. eines Batteriemoduls beeinträchtigt werden kann.
- Um die Funktion von Batterie bzw. Batteriemodul auch bei kleinen Leckagen sicherzustellen, müssen die Räume zwischen Polplatte und Druckkissen nach außen "entlüftet" werden. Bei schwankendem Druck des Raumes, in den entlüftet wird, sind dadurch relativ aufwendige Vorrichtungen erforderlich, um den Druck am Austritt der Entlüftungsleitung auch bei schwankenden Leckgasmengen möglichst konstant zu halten.
- Die geschilderte Konstruktion ist relativ aufwendig und verursacht deshalb bei mehrfacher Verwendung in einem Zellstapel, beispielsweise bedingt durch eine Parallelschaltung von Zellen oder Zellgruppen, nicht unerhebliche Kosten.

Aufgabe der Erfindung ist es, ein Bauteil für den Stromanschluß einer Batterie der eingangs genannten Art - mit jeweils zwei Kontaktbleche aufweisenden Kontaktkörpern - anzugeben, das auch einen Betrieb der Batterie bei erhöhtem Umgebungsdruck erlaubt, bei gleichzeitiger Verwendung von Druckkissen zur isostatischen Kontaktdruckerzeugung, und das ferner eine Parallelschaltung von Zellen oder Zellgruppen (innerhalb des Zellstapels) ermöglicht.

Dies wird erfindungsgemäß dadurch erreicht, daß zwischen die beiden Kontaktbleche jedes Kontaktkörpers eine Metallplatte umlaufend eingeschweißt ist, daß die Metallplatte eine nach außen überstehende metallische Lasche aufweist, und daß die Metallplatte am Rand mit einem Elastomeren versehen ist.

Beim Bauteil nach der vorliegenden Erfindung ist die Polplatte in das Druckkissen integriert. Dies bringt sowohl funktionstechnische als auch fertigungstechnische Vorteile mit sich, d.h. ein derartiges Bauteil ist in fertigungstechnischer Hinsicht relativ einfach zu realisieren. Darüber hinaus werden bei der Verwendung des erfindungsgemäßen Bauteils sämtliche der vorstehend genannten Probleme beseitigt.

Vorteilhafte Ausgestaltungen des Bauteils nach der Erfindung bestehen darin, daß die Metallplatte und die metallische Lasche aus Kupfer bestehen, und daß die Kontaktbleche wellenförmig geprägt sind.

Anhand einer Figur, in der eine vorteilhafte Ausführungsform des erfindungsgemäßen Bauteils schematisch im Schnitt dargestellt ist, soll die Erfindung noch näher erläutert werden.

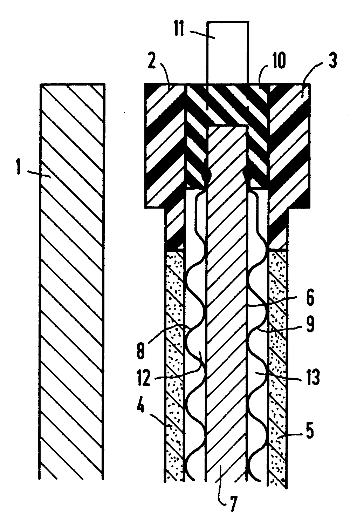

Die Figur zeigt einen Teilbereich einer Batterie mit einer Druckplatte 1 und einer aus Zellrahmen 2 und 3, Elektroden 4 und 5 sowie einem Bauteil 6 nach der Erfindung bestehenden Baueinheit. Die Batterie weist zwei Druckplatten und mehrere dieser Baueinheiten auf. Bei der endständigen, d.h. der an der Druckplatte 1 angeordneten Baueinheit entfallen dabei der Zellrahmen 2 und die Elektrode 4.

Das Bauteil 6 weist eine Metallplatte 7, zwei Kontaktbleche 8 und 9 sowie einen Elastomerrahmen 10 auf, mit dem die Metallplatte am Rand umpreßt ist. Die Kontaktbleche 8 und 9 sind, wie in der Figur dargestellt ist, mit der Metallplatte 7 verschweißt. Die Metallplatte 7 besitzt eine metallische Lasche 11, die für den äußeren Stromanschluß nach außen geführt ist, vorzugsweise radial. Räume 12 und 13 zwischen der Metallplatte 7 und den Kontaktblechen 8 bzw. 9 dienen zur Aufnahme eines Fluids zur Druckerzeugung.

Die Druckplatte 1 besteht aus Kunststoff oder mit Kunststoff überzogenem Metall. Die Metallplatte 7 samt Lasche 11, d.h. die Polplatte, besteht aus Kupfer und ist ca. 1 mm dick; sie ist umlaufend zwischen die Kontaktbleche 8 und 9 eingeschweißt. Die Kontaktbleche sind lediglich ca. 0,2 mm dick und deshalb flexibel, und sie bestehen beispielsweise aus Nickel. Die Kontaktbleche sind ferner wellenförmig geprägt (Höhe der Wellungen: ca. 1 mm) und bilden somit Gasleitwege für die gasförmigen Reaktanten der Batterie, beispielsweise Wasserstoff und Sauerstoff, die den Elektroden 4 bzw. 5 zugeführt werden (Druck: jeweils ca. 2 bar); als Elektrolyt dient beispielsweise Kalilauge. Das Druckmedium ist beispielsweise Stickstoff (Druck: ca. 3 bar).

## Patentansprüche

1. Bauteil für den Stromanschluß einer Batterie aus elektrochemischen Zellen, insbesondere Brennstoffelementen, mit Druckkissen in Form von jeweils zwei Kontaktbleche aufweisenden metallischen Kontaktkörpern, **dadurch gekennzeichnet,** daß zwischen die beiden Kontaktbleche (8, 9) jedes Kontaktkörpers eine Metallplatte (7) umlaufend eingeschweißt ist, daß die Metallplatte (7) eine nach außen überstehende metallische Lasche (11) aufweist, und daß die Metallplatte (7) am Rand mit einem Elastomerrahmen (10) versehen ist.

2. Bauteil nach Anspruch 1, **dadurch gekennzeichnet,** daß die Metallplatte (7) und die metallische Lasche (11) aus Kupfer bestehen.

3. Bauteil nach Anspruch 1 oder 2, **dadurch gekennzeichnet,** daß die Kontaktbleche (8, 9) wellenförmig geprägt sind.

## Claims

1. Assembly for current connection of a battery of electro-chemical cells, in particular fuel cells, with pressure pads in the form of metallic contact bodies respectively having two contact sheets, characterized in that in-between the two contact sheets (8, 9) of each contact body there is circumferentially welded a metal plate (7), in that the metal plate (7) has a metallic shackle (11) projecting to the outside, and in that the metal plate (7) is provided on its edge with an elastomeric frame (10).

2. Assembly according to claim 1, characterized in that the metal plate (7) and the metallic shackle (11) are formed of copper.

3. Assembly according to claim 1 or 2, characterized in that the contact sheets (8, 9) are stamped in a corrugated manner.

## Revendications

1. Elément de raccordement électrique d'une batterie de piles électrochimiques, notamment d'éléments combustibles, comprenant des coussins de pression sous forme de pièces métalliques de contact présentant chacune deux tôles de contact, caractérisé en ce qu'entre les deux tôles de contact (8, 9) de chaque pièce de contact est soudée, sur toute sa périphérie, une plaque métallique (7), en ce que la plaque métallique (7) comporte une languette (11) métallique en saillie vers l'extérieur, et en ce que la plaque métallique (7) est munie sur le bord d'un cadre (10) en élastomère.

2. Elément suivant la revendication 1, caractérisé en ce que la plaque métallique (7) et la languette (11) métallique sont en cuivre.

3. Elément suivant la revendication 1 ou 2, caractérisé en ce que les tôles de contact (8, 9) sont ondulées par emboutissage.